# EUROPÄISCHE PATENTSCHRIFT

(11) **EP 2 784 343 B1**
(45) Veröffentlichungstag und Bekanntmachung des Hinweises auf die Patenterteilung: **04.10.2017**
(21) Anmeldenummer: 14001016.6
(22) Anmeldetag: 19.03.2014
(51) Int. Cl.: F16D 49/02, F16D 65/04, B27B 17/08

(54) **Handgeführtes Arbeitsgerät und Verfahren zur Herstellung einer Bremseinrichtung eines handgeführten Arbeitsgeräts**
Hand-held work device and method for producing a braking device of a hand-held work device
Outil à main et procédé de fabrication d'un dispositif de freinage d'un outil à main

(30) Priorität: 27.03.2013 DE 102013005287
(43) Veröffentlichungstag der Anmeldung: 01.10.2014
(73) Patentinhaber: Andreas Stihl AG & Co. KG, 71336 Waiblingen (DE)
(72) Erfinder: Apfel, Norbert, D-71334 Waiblingen (DE); Schumacher, Manfred, D-71397 Leutenbach (DE); Cornelsen, Ralf, D-71546 Aspach (DE)
(74) Vertreter: Reinhardt, Annette

(56) Entgegenhaltungen:
- DE-A1- 3 209 162
- "Kolsterisieren", , 31. Dezember 2005 (2005-12-31), XP055143654, Gefunden im Internet: URL:http://internet.bodycote.org/kolsteris ing/brochures/147-290_BODY_kolst_DE_FINR.p df [gefunden am 2014-09-30]

## Beschreibung

Die Erfindung betrifft ein handgeführtes Arbeitsgerät der im Oberbegriff des Anspruchs 1 angegebenen Gattung und ein Verfahren zur Herstellung einer Bremseinrichtung eines handgeführten Arbeitsgeräts der im Oberbegriff des Anspruchs 10 angegebenen Gattung. Aus der DE 38 02 488 A1 ist es bekannt, Bremsbänder, die beispielsweise zum Stillsetzen der Sägekette einer Motorsäge dienen können, zu beschichten. Die Beschichtung kann beispielsweise mit Aluminiumoxid in einem Plasmabeschichtungsverfahren erfolgen. Durch eine solche Beschichtung des Bremsbands lassen sich kurze Bremszeiten bei hoher Standzeit des Bremsbands realisieren. Eine solche Beschichtung ist jedoch vergleichsweise aufwendig und daher teuer.

Aus der DE 195 81 791 B4 ist eine Reibpaarung für eine Synchronisiereinrichtung in Zahnräderwechselgetrieben bekannt, bei der einer der Reibpartner ein hochchromhaltiger ferritischer oder austenitischer Stahl mit einer carbidreichen Zone mit mindestens 30 Vol.-% Carbiden ist. Es ist auch vorgesehen, die beiden Reibpartner bei 1.050°C in einer sauerstofffreien Atmosphäre aufzukohlen. Dadurch entstehen in der oberflächennahen Schicht Chrommischcarbide. Bauteile mit einer aufgekohlten Oberfläche sind spröde. Ein Bremsband einer Bremseinrichtung eines handgeführten Arbeitsgeräts mit einer solchen Oberfläche könnte im Betrieb brechen, da im Betrieb aufgrund der starken Erhitzung des Bremsbands beim Bremsvorgang immer wieder eine Austenitisierung erfolgt, wodurch das Bremsband versprödet.

Aus der DE 10 2004 060 016 A1 ist es für eine Reibpaarung auch bekannt, einen der Reibpartner zunächst durch ein Härteverfahren wie Einsatzhärten zu behandeln. Auch das Einsatzhärten erfolgt üblicherweise bei sehr hohen Temperaturen über 900°C.

Aus dem Prospekt "Kolsterisieren" der Firma Bodycote Hardiff BV, Apeldoorn, Niederlande, ist ein Verfahren zum Oberflächenhärten von austenitischem, rostfreiem Stahl bekannt, bei dem bei niedrigen Temperaturen Kohlenstoff in die Oberfläche des Werkstoffs eindiffundiert wird. Dabei werden keine Carbide gebildet. Die "kolsterisierte" Oberfläche soll eine erhöhte Verschleißbeständigkeit besitzen und ein Fressen an Gleitflächen vermeiden. Die Adhäsionsneigung soll verringert werden.

Aus der DE 32 09 162 A1 ist eine Motorsäge mit einer Bremseinrichtung bekannt, die als Reibpartner ein Bremsband und eine Bremstrommel umfasst. Einer der beiden Reibpartner kann beispielsweise aus austenitischem Stahl sein.

Der Erfindung liegt die Aufgabe zugrunde, ein handgeführtes Arbeitsgerät der gattungsgemäßen Art zu schaffen, dessen Bremseinrichtung eine hohe Lebensdauer besitzt und gute Bremsergebnisse liefert. Eine weitere Aufgabe der Erfindung besteht darin, ein Verfahren zur Herstellung einer Bremseinrichtung eines handgeführten Arbeitsgeräts anzugeben, die eine hohe Lebensdauer besitzt und kurze Bremszeiten erzielt.

Diese Aufgabe wird bezüglich des handgeführten Arbeitsgeräts durch ein handgeführtes Arbeitsgerät mit den Merkmalen des Anspruchs 1 gelöst. Bezüglich des Verfahrens wird die Aufgabe durch ein Verfahren mit den Merkmalen des Anspruchs 10 gelöst.

Es hat sich gezeigt, dass eine Randschicht, deren Härte etwa 150% bis 600% der Härte des Grundkörpers beträgt und deren Carbidanteil weniger als 0,5 Gew.-% beträgt, nicht nur sehr verschleißfest ist, sondern überraschend auch sehr gute Bremsleistungen erzielt. Gegenüber einem nicht behandelten Reibpartner können die Bremszeiten halbiert oder sogar bis auf ein Drittel gesenkt werden. Der erste Reibpartner ist dabei ein austenitischer Stahl, ein Duplexstahl, ein Superduplexstahl, eine Nickelbasislegierung oder eine Kobaltbasislegierung. Durch die Randschicht wird eine maßgebliche Verringerung der Bremszeiten erreicht. Die Randschicht kann durch Eindiffundieren von Kohlenstoff und/oder Stickstoff bei einer Temperatur von weniger als etwa 500°C hergestellt werden. Aufgrund der niedrigen benötigten Temperatur ist die Herstellung vergleichsweise einfach und kostengünstig. Das Verfahren wird beim Eindiffundieren von Kohlenstoff als "kolsterisieren" (eingetragene Marke der Firma Bodycote plc.) bezeichnet. Beim Eindiffundieren von Kohlenstoff lagern sich Kohlenstoffatome in die Matrix des Stahls ein. Der Hauptteil der Kohlenstoffatome reagiert dabei nicht mit dem Material des ersten Reibpartners, so dass sich keine Carbide bilden und der Carbidanteil in der Randschicht weniger als etwa 0,5 Gew.-% beträgt.

Die Randschicht besitzt eine hohe Zähigkeit und Tieftemperaturzähigkeit. Dadurch können Oberflächenrisse vermieden werden und es werden lange Standzeiten erzielt. Durch die Randschicht mit einer Härte von etwa 150% bis etwa 600% der Härte des Grundkörpers und einem Carbidanteil von weniger als etwa 0,5 Gew.-% wird nicht nur der Verschleiß am ersten Reibpartner, sondern auch der Verschleiß am zweiten Reibpartner reduziert. Die Randschicht ist vorteilhaft lediglich eine Diffusionszone, aber keine auf den Grundkörper aufgebrachte Schicht ist, so dass ein Abplatzen der Randschicht vermieden ist. Der geringe Anteil von Carbiden verhindert ein Verspröden des Reibpartners.

Die Randschicht besitzt vorteilhaft eine Dicke von etwa 5 µm bis etwa 50 µm. Als besonders vorteilhaft wird eine Dicke der Randschicht von etwa 15 µm bis etwa 35 µm angesehen. Die Schichtdicke der Randschicht ist demnach sehr gering. Die Schichtdicke ist geringer als der Verschleiß des ersten Reibpartners im Betrieb. Überraschenderweise wurde festgestellt, dass die deutliche Verkürzung der Bremszeit auch dann noch gegeben ist, wenn der Verschleiß die ursprüngliche Dicke der Randschicht übersteigt. Es wird vermutet, dass die eindiffundierten Atome in der Matrix weiter zum Grundkörper diffundieren, wenn der Reibpartner beim Bremsvorgang erwärmt wird.

In die Randschicht kann zur Erhöhung der Härte gegenüber der Härte des Grundkörpers auch Stickstoff eindiffundiert werden. Wird Stickstoff in die Randschicht eindiffundiert, so lagert sich der Stickstoff vorteilhaft in der Matrix des ersten Reibpartners ein. Der Hauptteil der Stickstoffatome reagiert nicht mit dem Material des ersten Reibpartners, so dass der Nitridanteil in der Randschicht gering ist. Der Nitridanteil in der Randschicht beträgt vorteilhaft weniger als etwa 1%, insbesondere weniger als etwa 0,5%.

Wird Kohlenstoff in die Randschicht eindiffundiert, so beträgt der Kohlenstoffgehalt in der Randschicht vorteilhaft etwa 1 Gew.-% bis etwa 7 Gew.-%. Wird Stickstoff in die Randschicht eindiffundiert, so beträgt der Stickstoffgehalt in der Randschicht vorteilhaft etwa 5 Gew.-% bis etwa 12 Gew.-%. Die Härte der Randschicht ist vorteilhaft durch eindiffundierten Kohlenstoff und/oder Stickstoff deutlich gesteigert. Die Härte des Grundkörpers beträgt vorteilhaft etwa 200 HV bis etwa 400 HV. Die Härte der Randschicht kann im Bereich von etwa 700 HV bis etwa 1.200 HV betragen. Aufgrund der hohen Härte der Randschicht ist die Verschleißfestigkeit stark erhöht.

Vorteilhaft ist der erste Reibpartner das Bremsband. Es kann jedoch auch vorgesehen sein, dass der erste Reibpartner die Bremstrommel ist. Der erste Reibpartner ist besonders vorteilhaft ein rostfreier, austenitischer Stahl und der zweite Reibpartner ein Stahl mit kubisch-raumzentrierter und/ oder tetragonal verzerrter Gitterstruktur.

Für ein Verfahren zur Herstellung einer Bremseinrichtung eines handgeführten Arbeitsgeräts ist vorgesehen, dass ein erster Reibpartner ein austenitischer Stahl, ein Duplexstahl, ein Superduplexstahl, eine Nickelbasislegierung oder eine Kobaltbasislegierung ist, und dass in eine Oberflächenschicht des ersten Reibpartners Kohlenstoff und/oder Stickstoff bei einer Temperatur von weniger als 500°C eindiffundiert wird.

Durch das Eindiffundieren von Kohlenstoff und/oder Stickstoff kann die Härte der Randschicht deutlich gesteigert werden. Aufgrund der geringen Temperaturen ist die Herstellung der Randschicht kostengünstig möglich. Dadurch, dass Kohlenstoff und/oder Stickstoff in die Matrix des Grundmaterials eindiffundiert sind, wird ein Verspröden des Materials vermieden.

Das Eindiffundieren von Stickstoff und/oder Kohlenstoff erfolgt vorteilhaft über einen langen Zeitraum von mehr als 48 Stunden, insbesondere von mehr als 96 Stunden. Der Kohlenstoff und/oder Stickstoff kann beispielsweise über sechs bis sieben Tage eindiffundiert werden. Beim Eindiffundieren des Kohlenstoffs bei Temperaturen von unter 500°C, insbesondere von unter 300°C entstehen keine Carbide in der Randschicht. Der Carbidanteil in der Randschicht beträgt weniger als etwa 0,5 Gew.-%. Beim Eindiffundieren von Stickstoff bei Temperaturen von unter 500°C, insbesondere von unter 300°C entstehen keine Nitride in der Randschicht. Dadurch wird ein Verspröden der Randschicht vermieden. Durch die eindiffundierten Kohlenstoffatome und/oder Stickstoffatome werden Druckeigenspannungen in der Randschicht induziert. Dadurch wird die dynamische Festigkeit verbessert. Als besonders vorteilhaft hat sich herausgestellt, wenn in die Randschicht nur Kohlenstoff eindiffundiert wurde.

Ein Ausführungsbeispiel der Erfindung wird im Folgenden anhand der Zeichnung erläutert. Es zeigen:
- Fig. 1: eine schematische Seitenansicht einer Motorsäge,
- Fig. 2: eine perspektivische Darstellung des Bremsbands der Motorsäge aus Fig. 1,
- Fig. 3: eine Seitenansicht des Bremsbands auf Fig. 2,
- Fig. 4: eine schematische Darstellung der Randschicht des Bremsbands,
- Fig. 5: eine schematische Darstellung einer Randschicht einer Bremstrommel.

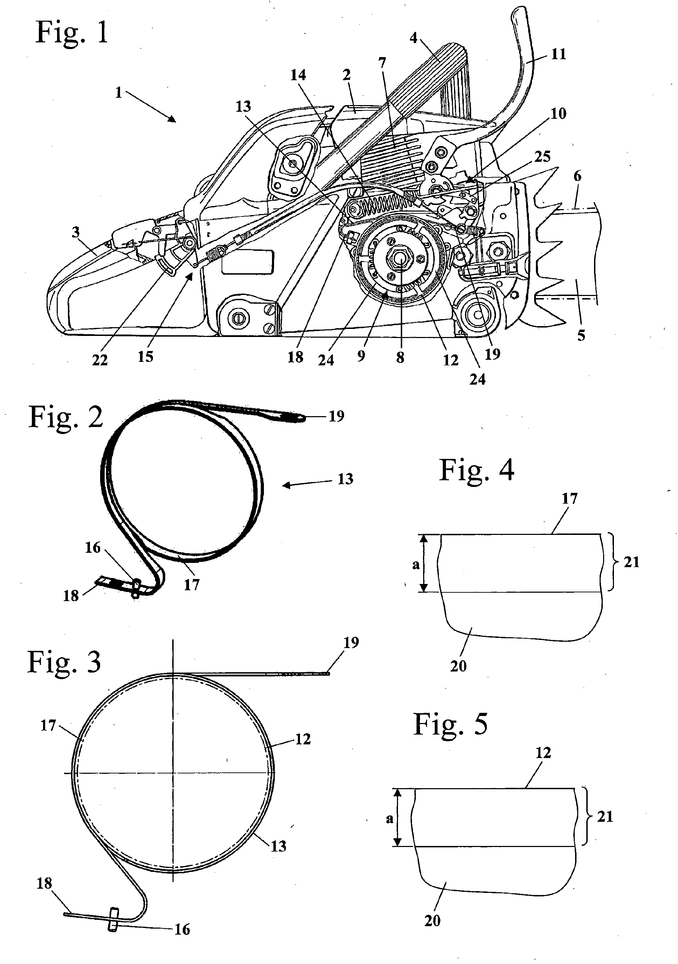

Die in Fig. 1 gezeigte Motorsäge 1 besitzt ein Gehäuse 2, an dem ein hinterer Handgriff 3 und ein Griffrohr 4 zum Führen der Motorsäge 1 festgelegt sind. Die Motorsäge 1 besitzt eine Führungsschiene 5, die an der dem hinteren Handgriff 3 abgewandten Vorderseite des Gehäuses 2 nach vorne ragt. An der Führungsschiene 5 ist eine Sägekette 6 umlaufend angeordnet. Die Sägekette 6 wird von einem in dem Gehäuse 2 angeordneten Verbrennungsmotor 7 umlaufend angetrieben. Anstatt des Verbrennungsmotors 7 kann auch ein Elektromotor vorgesehen sein, der vorteilhaft über ein Stromkabel, von einer Batterie oder von einem Akkumulator mit Energie versorgt wird. Der Verbrennungsmotor 7 ist als Einzylindermotor ausgebildet. Vorteilhaft ist der Verbrennungsmotor 7 ein Zweitaktmotor oder ein gemischgeschmierter Viertaktmotor. Der Verbrennungsmotor 7 besitzt eine Kurbelwelle 8, die über eine Fliehkraftkupplung 9 mit einem in Fig. 1 nicht gezeigten Ritzel verbunden ist, das die Sägekette 6 antreibt.

Die Fliehkraftkupplung 9 besitzt eine Bremstrommel 12, gegen die im Betrieb aufgrund der Fliehkraft Fliehgewichte 24 der Fliehkraftkupplung 9 gedrückt werden. Die Bremstrommel 12 ist Teil einer Bremseinrichtung 10 der Motorsäge 1. Neben der Bremstrommel 12 umfasst die Bremseinrichtung 10 ein Bremsband 13, das die Bremstrommel 12 an ihrem Außenumfang umschlingt. In unbetätigtem Zustand liegt das Bremsband 13 mit geringem radialem Abstand zum Umfang der Bremstrommel 12. Bei Betätigung der Bremseinrichtung 10 wird die vom Bremsband 13 gebildete Schlinge zugezogen und das Bremsband 13 gegen den Umfang der Bremstrommel 12 gepresst, so dass die Bremstrommel 12 zum Stillstand kommt. Es kann auch vorgesehen sein, dass das Bremsband 13 die Bremstrommel 12 nur teilweise umschlingt.

Zur Betätigung der Bremseinrichtung 10 ist am Gehäuse 2 ein Handschutz 11 gelagert, der sich an der der Führungsschiene 5 zugewandten Seite des Griffrohrs 4 erstreckt. Der Handschutz 11 betätigt die Bremseinrichtung 10 über einen Kniehebelmechanismus 25. Der Kniehebelmechanismus 25 wird von einer Feder 14 in seinen beiden Endstellungen, nämlich der unbetätigten Stellung und der betätigten Stellung der Bremseinrichtung 10 gehalten. Der Kniehebelmechanismus 25 greift an einem auch in Fig. 2 und Fig. 3 gezeigten Auslösende 19 des Bremsbands 13 an und zieht das Bremsband 13 beim Auslösen der Bremseinrichtung 10 fest um die Bremstrommel 12. Das andere Ende, nämlich das Befestigungsende 18 des Bremsbands 13 ist am Gehäuse 2 der Motorsäge 1 festgelegt. Wie Fig. 2 zeigt, ist am Befestigungsende 18 ein Bolzen 16 am Bremsband 13 vorgesehen, mit dem das Bremsband 13 im Gehäuse 2 fixiert werden kann.

Die in Fig. 1 gezeigte Motorsäge 1 besitzt außerdem eine Zusatzbremseinrichtung 15 zur Betätigung der Bremseinrichtung 10. Die Zusatzbremseinrichtung 15 dient als Auslaufbremse für die Sägekette 6 und wird beim Loslassen eines am hinteren Handgriff 3 gelagerten Gashebels 22 betätigt.

Wie Fig. 3 zeigt, besitzt das Bremsband 13 an seiner der Bremstrommel 12 zugewandten Innenseite eine Anlagefläche 17, mit der das Bremsband 13 in angezogenem Zustand der Bremseinrichtung 10 am Außenumfang der Bremstrommel 12 anliegt und diese dadurch abbremst. Die Anlagefläche 17 ist an einer Randschicht 21 des Bremsbands ausgebildet, die in Fig. 4 schematisch gezeigt ist.

Wie Fig. 4 zeigt, besitzt das Bremsband 13 einen Grundkörper 20, an dem die Randschicht 21 ausgebildet ist. Der Grundkörper 20 ist ein rostfreier, austenitischer Stahl, ein Duplexstahl, ein Superduplexstahl, eine Nickelbasislegierung oder eine Kobaltbasislegierung, insbesondere eine Stellitelegierung.

Ein austenitischer Stahl für den Grundkörper 20 des Bremsbands 13 kann beispielsweise eine der folgenden Legierungen sein: 1.4301; 1.4310; 1.4305; 1.4401; 1.4404; 1.4435; 1.4571; 1.4580; 1.4944; 1.4980; 1.4539; AISI 316; AISI 304.

Die Zusammensetzung dieser und weiterer für den Grundkörper 20 des Bremsbands geeigneter Stähle ist in der folgenden Tabelle aufgelistet:

| **WNr.** | Chemische Analyse in Gewichts% | | | | | | | | | |
|---|---|---|---|---|---|---|---|---|---|---|
| | **C** | **Si** | **Mn** | **P ≤** | **S ≤** | **Cr** | **Mo** | **Ni** | **Fe** | **Sonstige** |
| **1.4003** | ≤0,03 | ≤1,00 | ≤1,50 | 0,040 | 0,015 | 10,5-12,5 | - | 0,30-1,00 | Rest | N ≤ 0,030 |
| **1.4006** | 0,08-0,15 | ≤1,00 | ≤1,50 | 0,040 | 0,015 | 11,5 - 13,5 | - | ≤0,75 | Rest | - |
| **1.4016** | ≤0,08 | ≤1,00 | ≤1,00 | 0,040 | 0,015 | 16,0-18,0 | - | - | Rest | - |
| **1.4108** | 0,25-0,35 | ≤1,00 | ≤1,00 | 0,030 | 0,025 | 14,0-16,0 | 0,85-1,10 | ≤0,50 | Rest | N 0,30-0,50 |
| **1.4162** | ≤0,04 | ≤1,00 | 4,0-6,0 | 0,040 | ≤0,01 5 | 21,0-22,0 | 0,10-0,80 | 1,35 - 1,70 | Rest | Cu 0,10 - 0,80; N 0,20 - 0,25 |
| **1.4301** | ≤ 0,07 | ≤ 1,00 | ≤ 2,00 | 0,045 | 0,015 | 17,5-19,5 | - | 8,00-10,5 | Rest | N ≤ 0,11 |
| **1.4305** | ≤ 0,10 | ≤ 1,00 | ≤ 2,00 | 0,045 | 0,15-0,35 | 17,0-19,0 | - | 8,00-10,0 | Rest | Cu ≤ 1,00; N ≤ 0,11 |
| **1.4306** | ≤0,03 0 | ≤1,00 | ≤2,00 | 0,045 | 0,015 | 18,0-22,0 | - | 10,0-12,0 | Rest | N ≤ 0,11 |
| **1.4307** | ≤0,03 0 | ≤1,00 | ≤2,00 | 0,045 | 0,015 | 17,5 - 19,5 | - | 8,00-10,5 | Rest | N ≤ 0,11 |
| **1.4310** | 0,05-0,15 | ≤ 2,00 | ≤ 2,00 | 0,045 | 0,015 | 16,0-19,0 | ≤ 0,80 | 6,00-9,50 | Rest | N ≤ 0,11 |
| **1.4319** | ≤0,07 0 | ≤1,00 | ≤2,00 | 0,045 | 0,030 | 16,0-18,0 | - | 6,00-8,00 | Rest | N ≤0,11 |
| **1.4362** | ≤0,03 0 | ≤1,0 | ≤2,0 | ≤0,035 | 0,015 | 22,0-24,0 | 0,10-0,60 | 3,50-5,50 | Rest | Cu0,10-0,60; N 0,05 - 0,20 |
| **1.4401** | ≤ 0,07 | ≤ 1,00 | ≤ 2,00 | 0,045 | 0,015 | 16,5 - 18,5 | 2,00-2,50 | 10,0-13,0 | Rest | N ≤ 0,11 |
| **1.4404** | ≤ 0,07 | ≤ 1,00 | ≤ 2,00 | 0,045 | 0,015 | 16,5 - 18,5 | 2,00-2,50 | 10,0-13,0 | Rest | N ≤ 0,11 |
| **1.4410** | ≤ 0,030 | ≤ 1,00 | ≤ 2,00 | 0,035 | 0,015 | 24,0-26,0 | 3,00-5,00 | 6,00-8,00 | Rest | N 0,24 - 0,35 |
| **1.4429** | ≤ 0,030 | ≤ 1,00 | ≤ 2,00 | 0,045 | 0,015 | 16,5 - 18,5 | 2,5-3,0 | 11,0 - 14,0 | Rest | N 0,12 - 0,22 |
| **1.4435** | ≤ 0,030 | ≤ 1,00 | ≤ 2,00 | 0,045 | 0,015 | 17,0-19,0 | 2,50-3,00 | 12,5-15,0 | Rest | N ≤ 0,11 |
| **1.4436** | ≤ 0,05 | ≤ 1,00 | ≤ 2,00 | 0,045 | 0,015 | 16,5 - 18,5 | 2,50-3,00 | 10,5 - 13,0 | Rest | N ≤ 0,11 |
| **1.4460** | ≤ 0,05 | ≤ 1,00 | ≤ 2,00 | 0,035 | 0,015 | 25,0-28,0 | 1,3-2,0 | 4,50-6,50 | Rest | N 0,05 - 0,20 |
| **1.4462** | ≤ 0,030 | ≤ 1,00 | ≤ 2,00 | 0,035 | 0,015 | 21,0-23,0 | 2,50-3,50 | 4,50-6,50 | Rest | N 0,10-0,22 |
| **1.4501** | ≤ 0,03 | ≤ 1,00 | ≤ 1,00 | 0,035 | 0,015 | 24,0-26,0 | 3,00-4,00 | 6,00-8,00 | Rest | Cu 0,50 - 1,00; N 0,20 - 0,30; W 0,50 - 1,00 |
| **1.4507** | ≤ 0,030 | ≤ 0,70 | ≤ 2,00 | 0,035 | 0,015 | 24,0-26,0 | 2,70-4,00 | 5,50-7,50 | Rest | N 0,15-0,30 |
| **1.4529** | ≤ 0,02 | ≤ 0,50 | ≤ 1,00 | 0,030 | 0,01 | 19,0-21,0 | 6,00-7,00 | 24,0-26,0 | Rest | N 0,15-0,25 Cu 0,50 - 1,50; |
| **1.4534** | ≤ 0,05 | ≤ 0,10 | ≤ 0,10 | 0,010 | 0,008 | 12,25 - 13,25 | 2,00-2,50 | 7,50-8,50 | Rest | Ti ≤0,1; N ≤0,01; Al 0,80-1,35 |
| **1.4539** | ≤ 0,02 | ≤ 0,70 | ≤ 2,00 | 0,030 | 0,010 | 19,0-21,0 | 4,00-5,00 | 24,0-26,0 | Rest | Cu 1,20 - 2,00; N ≤ 0,15 |
| **1.4541** | ≤ 0,08 | ≤ 1,00 | ≤ 2,00 | 0,045 | 0,015 | 17,0-19,0 | - | 9,00-12,00 | | Ti (5xC) ≤ 0,70 |
| **1.4542** | ≤ 0,07 | ≤ 0,70 | ≤ 1,50 | 0,04 | 0,015 | 15,0-17,0 | ≤0,60 | 3,00-5,00 | Rest | Nb 5xC - 0,45; Cu 3,00 - 5,00 |
| **1.4545** | ≤ 0,07 | ≤ 1,00 | ≤ 1,00 | 0,030 | 0,015 | 15,0-15,5 | ≤0,50 | 3,00-5,50 | Rest | Nb ≥(5xC)≤0,45; Cu 2,50 - 4,50 |
| **1.4547** | ≤0,02 | ≤0,70 | ≤1,00 | 0,030 | 0,01 | 19,5-20,5 | 6,00-7,00 | 17,5 - 18,5 | Rest | Cu 0,50 - 1,00; N 0,18-0,25 |
| **1.4562** | ≤0,15 | ≤0,30 | ≤2,00 | 0,02* | 0,01* | 26,0-28,0 | 6,00-7,00 | 30,0-32,0 | Rest | Cu 1,00 - 1,40; N 0,15-0,25 |
| **1.4563** | ≤0,02 | ≤0,70 | ≤2,00 | 0,030 | 0,01 | 26,0-28,0 | 3,00-4,00 | 30,0-32,0 | Rest | Cu 0,70- 1,50; N ≤0,11 |
| **1.4565** | ≤0,03 | ≤1,00 | 5,00-7,00 | 0,030 | 0,015 | 24,0-26,0 | 4,00-5,00 | 16,0-19,0 | Rest | N 0,30 - 0,60, Nb≤ 0,150 |
| **1.4567** | ≤0,04 | ≤1,00 | ≤2,00 | 0,045 | ≤0,01 5 | 17,0-19,0 | - | 8,50-10,5 | Rest | Cu 3,00 - 4,00; N ≤0,11 |
| **1.4568** | ≤0,09 | ≤0,70 | <1,00 | 0,004* | 0,015 * | 16,0-18,0 | - | 6,50-7,80 | Rest | Al 0,70-1,50 |
| **1.4571** | ≤ 0,08 | ≤ 1,00 | ≤ 2,00 | 0,045 | 0,015 | 16,5-18,5 | 2,00-2,50 | 10,0-13,5 | Rest | Ti 5; C ≤ 0,70 |
| **1.4580** | ≤ 0,08 | ≤ 1,00 | ≤ 2,00 | 0,045 | 0,015 | 16,5-18,5 | 2,00-2,50 | 10,5-13,5 | Rest | Nb (10xC) ≤ 1,00 |
| **1.4591** | ≤0,01 5 | ≤0,50 | ≤2,00 | 0,020 | 0,010 | 31,0-35,0 | 0,50-2,00 | 30,0-33,0 | Rest | Cu 0,30 - 1,20; N 0,35-0,60 |
| **1.4652** | ≤0,02 | ≤0,50 | 2,00-4,00 | 0,030 | 0,005 | 23,0-25,0 | 7,00-8,00 | 21,0-23,0 | Rest | Cu 0,30 - 0,60; N 0,45 - 0,55 |
| **1.4662** | ≤0,02 | ≤0,70 | 1,00 - 3,00 | | | 20,0-24,0 | 1,50-3,50 | 3,50-9,00 | Rest | N ≤0,27 |
| **1.4845** | ≤0,10 | ≤1,50 | ≤2,00 | 0,045 | 0,015 | 24,0-26,0 | - | 19,0-22,0 | Rest | N ≤0,11 |
| **1.4847** | ≤ 0,08 | ≤ 1,00 | ≤ 1,00 | 0,030 | 0,015 | 18,0-22,0 | - | 18,0-22,0 | Rest | Al ≤50,60; Ti 0,60 |
| **1**.**4944** | ≤0,08 | ≤1,00 | ≤2,00 | 0,030 | 0,015 | 13,5-16,0 | 1,00-1,50 | 24,0-27,0 | Rest | V 0,10 - 0,50, Al ≤0,35; B 0,003 - 0,010, Ti 1,90 - 2,30 |
| **1.4980** | 0,03-0,08 | ≤ 1,00 | 1,00-2,00 | 0,025 | 0,015 | 13,5-16,0 | 1,00-1,50 | 24,0-27,0 | Rest | Alg/tot < 0,35; B 0,003-0,010; V 0,10-0,50; Ti 1,90-2,30 |

Die Normen, nach denen sich die Bezeichnungen der in der Tabelle genannten Stähle richten, sind in der folgenden Tabelle aufgelistet, wobei jeweils deutsche bzw. europäische Bezeichnungen und Normen und amerikanische Bezeichnungen und Normen angegeben sind:

| **WNr.** | **Werkstoff** | **Norm** |
|---|---|---|
| **1.4003** | X2CrNi12 | EN 10028-7 : 2008-02; UNS; ASTM A 240; |
| | X2Cr11 | |
| | S41050 | |
| **1.4006** | X12Cr13 | DIN EN 10088-1 : 2005-09; EN 10088-4/-5 AISI, UNS, AMS 5350, 5504, 5505, 5591, 5613, 5776, 5777, 5867, QQ-S-763, ASME SA-194, 240, 268, 479, ASTM A 1012, 1021, 1028, 182, 193, 194, 240, 268, 276, 314, 336, 473, 479, 493, 511, 580, 815, 837, 982, 988, ASTM F 1079, 116, 1613, 2215, 2281, 593, 594, 738, 836, 837, 899, SAE J 405, 467 |
| | X10Cr13 | |
| | 410,S41000 | |
| **1.4016** | X6Cr17 | DIN EN 10088-1 : 2005-09 AISI, UNS, AMS 5503, 5627, AMS-QQ-S-763, ASME SA-182, 240, 268, 479, ASTM A 240, 268, 276, 314, 473, 479, 493, 511, 580, 815, ASTM F 2215, 2281, 594, 738, 836, 593, SAE J 405, 412 |
| | 430 | |
| | S43000 | |
| **1.4108** | X30CrMoN15-1 | SEW 400 |
| | AMS 5898* | AMS |
| **1.4162** | X2CrMnNiN21-5-1 | VdTÜV-Wbl 556 : 2011-09 |
| | Duplex | DIN EN 10088-4; -5 : 2010-01 |
| **1.4301** | X5CrNi18-10 | EN 10028-7; EN 10088-1; -2; -3; -4; -5; EN 10151; EN10216-5; EN 10217-7; EN 10222-5; EN 10250-4; EN 10263-5; EN 10264-4; EN 10269; EN 10272; EN 10296-2; EN 10297-2; EN 10312; 5512-3 AISI, UNS, ASME, SA-240, SAE |
| | X5CrNi18 9 (V2A) | |
| | 304, 30400 | |
| **1.4305** | X8CrNiS18-9 / X10CrNiS18 9 | EN 10088-1; -2; -3; -5; EN 10297-2; EN 10312 AISI, UNS, AMS 5640, ASME SA-194, ASME SA-320, ASTM A 194, 314, 320, 473, 581, 582, 895, ASTM F 593, 594, 738, 836, 837, 880, 899, SAE J 412 |
| | 303, S30300, Type 1, 8F, 8FA, B8F, BBFA, 30303 | |
| **1.4306** | X2CrNi19-11 | DIN EN 10028-7 : 2008-02 UNS, ASTM A 240, AISI, ASME SA-240, SAE |
| | 304L, S30403 | |
| **1.4307** | X2CrNi18-9 | DIN EN 10272 : 2008-01 UNS, ASTM A 479, AISI, ASME SA-479, SAE |
| | 304L,S30403 | |
| **1.4310** | X10CrNi18-8 / X12CrNi17 7 | EN 10088-1; -2; -3; EN 10151; EN 10263-5; EN 10264-4; EN 10270-3; EN 10312 AISI, UNS, AMS 5517, 5518, 5519, 5901, 5902, ASTM A 240, 554, 666, ASTM F 899, SAE J 405, 412 |
| | 301, S30100, MT301, 30301 | |
| **1.4319** | X5CrNi17-7 | EN 10088-1 : 2005-09; EN 10312 AISI, ISO TS 15510 |
| | X3CrNiN 17-8 | |
| | 302 | |
| **1.4362** | X2CrNiN23-4 | DIN EN 10028-7 : 2008-02 AISI, ASTM A 240, UNS |
| | SAF2304, S32304 | |
| | Duplex | |
| **1.4401** | X5CrNiMo17-12-2 | EN 10028-7; EN 10088-1; -2; -3; -4; -5; EN 10151; EN 10216-5; EN 10217-7; EN 10222-5; EN 10250-4; EN 10263-5; EN 10264-4; EN 10269; EN 10270-3; EN 10272; EN 10296-2; EN 10297-2; EN 10312; 5512-3 AISI; UNS, ASTM A 240, ASME SA-240, SAE |
| | X5CrNiMo18 10 | |
| | (V4A) | |
| | 316, S31600 | |
| **1.4404** | X2CrNiMo17-12-2 | DIN EN 10028-7 : 2008-02 AISI; UNS, ASTM A 240, ASME SA-240, SAE |
| | X2CrNiMo17-13-2 | |
| | 316L, S31603 | |
| **1.4410** | X2CrNiMoN25-7-4 | EN 10028-7 ASTHM A240, UNS |
| | Super Duplex | |
| | SAF 2507, S32750 | |
| **1.4429** | X2CrNiMoN17-13-3 | DIN EN 10028-7 : 2008-02 AISI, ASTM A 240, SAE, UNS |
| | 316LN, S31653 | |
| **1.4435** | X2CrNiMo18-14-3 | EN 10028-7; EN 10088-1; -2; -3; -4; -5; EN 10216-5; EN 10217-7; EN 10222-5; EN 10250-4; EN 10272; EN 10296-2; EN 10297-2; EN 10312 AISI, UNS, ASTM A 240, ASME SA-240, SAE |
| | 316L, S31603 | |
| **1.4436** | X3CrNiMo17-13-3 | DIN EN 10028-7 : 2008-02 ASME SA UNS AISI, ASTM A 240, 240, SAE, |
| | X5CrNiMo17-13-3 | |
| | 316, S31600 | |
| **1.4460** | X3CrNiMoN27-5-2 | EN 10088-1;-3;-5; EN 10250-4; EN 10297-2 AISI, UNS, SAE, ASTM A 790 |
| | X4CrNiMoN27 5 2 | |
| | Duplex 329, S31260 | |
| **1.4462** | X2CrNiMoN22-5-3 | EN 10028-7; EN 10088-1; -2; -3; -4; -5; EN 10216-5; EN 10217-7; EN 10222-5; EN 10250-4; EN 10263-5; EN 10272; EN 10296-2; EN 10297-2; EN 10312; 5512-3 AISI, UNS, ASTM A 240, ASME SA-182, 240, 789, 790, 815, SAE J 405 |
| | Duplex | |
| | SAF2205, S32205, S31803 | |
| **1.4501** | X2CrNiMoCuWN25-7-4 | DIN EN 10028-7 : 2008-02 |
| | Super Duplex | |
| | S32760, Zeron 100 | ASTM A 240, UNS |
| **1.4507** | X2CrNiMoCuN25-6-3 | DIN EN 10028-7 : 2008-02 |
| | Super Duplex | |
| | 255, S32520 | ASTM A 240, UNS |
| **1.4529** | X1NiCRMoCuN25-20-7 | DIN EN 10028-7 : 2008-02 |
| | Super Duplex | |
| | N08926 | UNS, ASTM A 240 |
| **1.4534** | X3CrNiMoA113-8-2 | EN 3357; EN 3358; EN 3359; EN 4347; EN 4461; EN 4462; EN 4463; EN 4464; EN 4465; EN 4466 UNS, ASTM A 276 |
| | S13800, XM13 | |
| **1.4539** | X1NiCrMoCu25-20-5 | EN 10028-7; EN 10088-1; -2; -3; -4; -5; EN 10216-5; EN 10217-7; EN 10222-5; EN 10250-4; EN 10272; EN 10296-2; EN 10297-2; EN 10312; AISI, UNS, ASTM A 240 |
| | Superaustenit | |
| | 904L, N08904 | |
| **1.4541** | X6CrNiTi18-10 | DIN EN 10028-7 : 2008-02 |
| | 321, S32100 | ASTM A 240, AISI, ASME SA-240, SAE, UNS |
| **1.4542** | X5CrNiCuNb16-4 | DIN EN 10088-1;-2;-3;-4;-5; EN 10250-4; EN 3973 AISI, UNS, AMS 5604, 5622, 5643, AS7474, ASME SA 564, ASME SA 705, ASTM A 1028, 564, 693, 705, 982, ASTM F 593, 594, 738, 836, 899, SAE J 467 |
| | S17400, 630,F,17-4PH | |
| **1.4545** | X5CrNiCu15-5 | DIN EN 2821; EN 3361; EN 3479 |
| | S15500, XM-12 | AISI, UNS, AMS 5659, 5826, 5862, ASME SA-705, ASTM A 564, 693, 705 |
| **1.4547** | X1CrNiMoCuN20-18-7 | DIN EN 10028-7 : 2008-02 |
| | Superaustenit | |
| | S31254, 254, Uranus B25 | SMO, UNS, ASTM A 240, ASME SA-240 |
| **1.4562** | X1NiCrMoCu32-28-7 | SEW 400 : 1997-02 |
| | Superaustenit | UNS, ASTM A 314, 366, 462, 564, 581, 619, 622, 625, |
| | N08031 | 626, ASTM B 649, 924 |
| **1.4563** | X1NiCrMoCu31-27-4 | DIN EN 10028-7 : 2008-02 |
| | Superaustenit | |
| | N08028 | UNS |
| **1.4565** | X2CrNiMnMoN25-18-6-5 | DIN EN 10088-1 : 2005-09 |
| | Superaustenit | UNS, ASTM A 1012, 182, 213, 240, 249, 269, 276, 312, 358, 403, 409, 479, 480, 943, SAE J 405 |
| | S43565, F49, 403, WPS34565 | |
| **1.4567** | X3CrNiCu18-9-4 | DIN EN 10269 : 2006-07 |
| | X3CrNiCu18 9 | AISI, UNS, ASTM A 493, ASTM F 593, 594, 836, 837, 879, 880, 899, 738, MIL-S-24149/6, MIL-S-24149/3, SAE J 775 |
| | 302 HQ, S30430 | |
| **1.4568** | X7CrNiA117-7 | DIN EN 10088-1;-2;-3;-4;-5; EN 10151; EN 10270-3 UNS, ASTM 631, AMS 5528, 5529, 5568, 5644, 5678, ASME SA-705, ASTM A 313, 564, 579, 693, 705, ASTM F 899, SAE J 217, 467 |
| | S32760, S17700, 631, 622, | |
| | 17-7PH, X7CrNiAl17-7 | |
| **1.4571** | X6CrNiMoTi17-12-2 | EN 10028-7; EN 10088-1; -2; -3; -4; -5; EN 10216-5; EN 10217-7; EN 10222-5; EN 10250-4; EN 10263-5; EN 10272; EN 10296-2; EN 10297-2; EN 10312; 5512-3 |
| | 316Ti, S31635 | |
| | | AISI, UNS, ASTM A 240, SAE |
| **1.4580** | X6CrNiMoNb17-12-2 | EN 10028-7; EN 10088-1; -2; -3; EN 10216-5; EN 10272; EN 10297-2; EN 10312 UNS, ASTM A 240, SAE |
| | 316Cb, S31640 | |
| **1.4591** | X1CrNiMoCuN33-32-1 | SEW 400: 1997-02 |
| | Superaustenit | UNS, ASTM B 366, 462, 472, 564, 619, 622, 625, 626,649,924 |
| | R20033 | |
| **1.4652** | X1CrNiMoCuN24-22-8 | DIN EN 10088-1 : 2005-09 |
| | Superaustenit | UNS, ASTM A 1012, 240, 249, 269, 276, 312, 358, 479, 480, 688, 988, SAE J 405 |
| | S32654 | |
| **1.4662** | X2CrNiMnMoCuN24-4-3-2 | |
| | alloy 2205; Duplex | ASTM, UNS, S82441 |
| **1.4845** | X8CrNi25-21 | DIN EN 10088-1 : 2005-09 |
| | Duplex | |
| | 310S, S31008 | AISI, UNS, AMS, ASME, ASTM A, SAE |
| **1.4847** | X8CrNiAlTi20-20 | AISI |
| | 334 | |
| **1.4944** | X5NiCrTiMoV26-15 | SEW 390 : 1991-11 |
| | Duplex | AISI 660, UNS, AMS 5731, 5732, 5734, 5735, 5736, 5737 |
| | S66286 | |
| **1.4980** | | EN 10088-1; EN 10269; EN 10302 |
| | X6NiCrTiMoVB25-15-2 / X5NiCrTi26-15 | UNS, AMS 5525, 5726, 5731, 5732, 5734, 5737, 5804, 5805, 5810, 5853, 5858, 5895, AMS AS7235, AS7477, |
| | 660, S66286, A286 | AS7478, AS7479, AS7481, AS7482, ASME SA-638, ASTM A 453, 638, ASTM F 2281, SAE J 467 |

Duplex- oder Superduplexstähle können beispielsweise 1.4462, 1.4944, 1.4980 oder SAF 2507 sein. Diese sind ebenfalls in obigen Tabellen aufgeführt.

Nickelbasislegierungen können beispielsweise die in der folgenden Tabelle aufgeführten Werkstoffe sein:

| **WNr.** | **Chemische Analyse in Gewichts%** | | | | | | | | | | | |
|---|---|---|---|---|---|---|---|---|---|---|---|---|
| | **C** | **Si** | **Mn** | **P ≤** | **S ≤** | **Cr** | **Fe** | **Mo** | **W** | **Co** | **Ni** | **Sonstige** |
| **2.4600** | ≤ 0,01 | ≤ 0,1 | ≤ 3,0 | 0,030 | 0,015 | 1,0-3,0 | 1,0-3,0 | 27,0-32,0 | ≤ 3,0 | ≤ 3,0 | ≥ 65,0 | Al 0,1-0,5; Cu ≤ 0,5 |
| **2.4602** | ≤ 0,015 | ≤ 0,08 | ≤ 0,5 | 0,020 | 0,02 | 20,0-22,5 | 2,0-6,0 | 12,5-14,5 | 2,5-3,5 | ≤ 2,5 | Rest | V ≤ 0,35 |
| **2.4610** | ≤ 0,015 | ≤ 0,08 | ≤ 1,0 | 0,025 | 0,015 | 11,0-18,0 | 3,2 | 14,0-17,0 | - | ≤ 2,0 | Rest | Cu ≤ 0,5; Ti 0,75-1,3 |
| **2.4612** | ≤ 0,02 | ≤ 0,2 | - | - | - | 14,0-18,0 | ≤ 3,0 | 14,0-17,0 | - | ≤ 0,5 | ≥ 56 | Ti ≤ 0,7; S ≤ 0,015; Mn ≤ 1,0 |
| **2.4616** | ≤ 0,02 | ≤ 0,2 | - | - | - | ≤ 1,0 | ≤ 2,0 | 26,0-30,0 | ≤ 1,0 | | ≥ 64,5 | Mn ≤ 2,0; S ≤ 0,05; V ≤ 0,4; Cu ≤ 0,5 |
| **2.4619** | ≤ 0,015 | ≤ 1,0 | ≤ 1,0 | 0,040 | 0,03 | 21,0-23,5 | 18,0 - 21,0 | 6,0-8,0 | ≤ 1,5 | ≤ 5,0 | 40 | Cu 1,5-2,5; Nb ≤ 0,5 |
| **2.4663** | 0,05 - 0.15 | ≤ 1,00 | ≤ 1,00 | - | 0,015 | 20,0-24,0 | ≤ 3,0 | 8,0-10,0 | - | 10,0 15,0 | ≥ 44,50 | Al 0,8-1,5; Ti ≤ 0,6; Cu ≤ 0,5; B ≤0,006 |
| **2.4665** | 0,05-0,15 | ≤ 1,0 | ≤ 1,0 | 0,020 | 0,015 | 20,5-23,0 | 17,0 - 20,0 | 8,0-10,0 | 0,2-1,0 | 0,5-2,5 | Rest | Al ≤ 0,5; Cu ≤ 0,5; B ≤0,010 |
| **2.4668** | 0,02-0,08 | ≤ 0,35 | ≤ 0,35 | 0,015 | 0,015 | 17,0-21,0 | 10,0 12,0 | 2,8-3,3 | - | < 1,0 | 50,0-55,0 | Al 0,3-0,7; B 0,002-0,006; Nb+Ta 5; Cu ≤ 0,3; Ti 0,6-1,2 |
| **2.4675** | ≤ 0,01 | 0,08 | ≤ 0,50 | 0,025 | 0,01 | 22,0-24,0 | ≤ 3,0 | 15,0-17,0 | - | < 2,0 | Rest | Al ≤ 0,5; Cu 1,3 - 1,9 |
| **2.4694** | ≤ 0,1 | ≤ 0,5 | ≤ 1,0 | - | 0,01 | 14,0-17,0 | 5,0-9,0 | - | - | - | ≥ 70,0 | Al 0,9-1,5; Cu ≤ 0,5; Nb 0,7-1,2; Ti 2,0-2,6 |
| **2.4733** | 0,05-0,15 | 0,25-0,75 | 0,3-1,0 | 0,03 | 0,015 | 20,0-24,0 | ≤ 3,0 | 1,0-3,0 | 13,0 15,0 | ≤ 5,0 | Rest | Al 0,2-0,5; B ≤ 0,015; La 0,005-0,05 |
| **2.4816** | 0,05-0,1 | ≤005-≤ 0,5 | ≤ 1,0 | 0,02 | 0,015 | 14,0-17,0 | 6,0-10,0 | - | - | - | 72,0 | Al ≤ 0,3; Cu ≤ 0,5; Ti ≤ 0,3 |
| **2.4819** | ≤ 0,01 | ≤ 0,08 | ≤ 1,0 | 0,025 | 0,01 | 14,5-16,5 | 4,0-7,0 | 15,0-17,0 | 3,0-4,5 | ≤ 2,5 | Rest | V ≤ 0,35 |
| **2.4851** | 0,03-0,1 | ≤ 0,5 | ≤ 1,0 | 0,020 | 0,015 | 21,0-25,0 | ≤ 18,0 | - | - | - | 58,0-63,0 | Al 1,0-1,7; Cu ≤ 0,5; Ti ≤ |
| | | | | | | | | | | | | 0,5 |
| **2.4856** | 0,03-0,1 | ≤ 0,5 | ≤ 0,5 | 0,020 | 0,015 | 20,0-23,0 | ≤ 5,0 | 8,0-10,0 | - | ≤ 1,0 | 58,0 | Al ≤ 0,4; Cu ≤ 0,5; Ti ≤ 0,4 |
| **2.4858** | ≤ 0,025 | ≤ 0,5 | ≤ 1,0 | 0,02 | 0,015 | 19,5-23,5 | 20,0 4 | 2,5-3,5 | - | ≤ 1,0 | 38,0-46,0 | Al ≤ 0,2; Cu 1,5-3,0; Ti 0,6-1,2 |
| **2.4883** | ≤ 0,12 | ≤ 0,50 | ≤ 1,0 | - | - | 15,5-17,5 | 4,5-7,0 | 16,0-18,0 | 3,75 - 5,25 | < 2,5 | Rest | |

Die Kobaltbasislegierungen können beispielsweise die Legierung mit der Werkstoffnummer 2.4979 (Stellite 21, entspricht R30021 nach UNS), Stellite 6b (R30016 nach UNS) oder Stellite 6 (R30106 nach UNS) sein. Stellite ist ein Markenname der Firma Deloro Stellite Holdings Corporation.

Zur Herstellung des Bremsbands 13 wird in das Bremsband 13 Kohlenstoff und/oder Stickstoff bei einer Temperatur von weniger als 500°C, insbesondere von weniger als 300°C eindiffundiert. Wird der Kohlenstoff und/oder Stickstoff bei höheren Temperaturen eindiffundiert, so können sich beim Carbonitrieren ab etwa 650°C Carbide und beim Nitrieren ab etwa 500°C Nitride bilden, die zu einer Versprödung der Randschicht 21 führen. Das Eindiffundieren erfolgt über einen Zeitraum von mehr als 48 Stunden, insbesondere von mehr als 96 Stunden. Insbesondere wird ausschließlich Kohlenstoff eindiffundiert. Vorteilhaft beträgt die Zeitdauer des Diffusionsvorgangs 6 bis 7 Tage. Die Bremstrommel 12, mit der das so behandelte Bremsband 13 zusammenwirkt, besteht vorteilhaft aus einem Stahl mit kubisch-raumzentrierter oder tetragonal verzerrter Gitterstruktur. Die Oberfläche der Bremstrommel 12 wird vorteilhaft nicht gehärtet oder beschichtet.

Alternativ kann auch vorgesehen sein, dass das Bremsband 13 aus einem Stahl mit kubisch-raumzentrierter oder tetragonal verzerrter Gitterstruktur besteht und die Bremstrommel 12 eine Randschicht 21 aufweist, in die Kohlenstoff und/oder Stickstoff eindiffundiert wurde. Eine Bremstrommel 12 mit einer Randschicht 21 ist schematisch in Fig. 5 gezeigt. In diesem Fall besteht die Bremstrommel 12 insbesondere aus einem rostfreien, austenitischen Stahl, einem Duplexstahl, einem Superduplexstahl, einer Nickelbasislegierung oder eine Stellitelegierung, insbesondere aus einer der oben genannten Legierungen.

Der Kohlenstoffgehalt in der Randschicht 21 beträgt etwa 1 Gew.-% bis etwa 7 Gew.-%. Der Kohlenstoff und/oder Stickstoff wird beim Eindiffundieren in Zwischengitterplätzen gelöst und bildet keine Carbide bzw. Nitride. Der Carbidanteil in der Randschicht 21 ist deshalb sehr gering. Vorteilhaft beträgt der Carbidanteil in einer Randschicht 21, in die Kohlenstoff eindiffundiert wurde, weniger als etwa 0,5 Gew.-%. Wurde Stickstoff eindiffundiert, so ist vorteilhaft der Nitridanteil in der Randschicht 21 sehr gering und beträgt weniger als etwa 1 Gew.-%, insbesondere weniger als etwa 0,5 Gew.-%. Die Härte der Randschicht 21 liegt vorteilhaft im Bereich von etwa 700 HV bis etwa 1.200 HV (Vickershärte). Die Härte der Randschicht 21 beträgt etwa 150% bis etwa 600% der Härte des Grundkörpers 20. Trotz der hohen Härte der Randschicht 21 versprödet das Bremsband 13 bzw. die Bremstrommel 12 mit einer Randschicht 21 nicht.

Die Randschicht 21 besitzt eine Dicke a von etwa 5 µm bis etwa 50 µm, insbesondere von etwa 15 µm bis etwa 35 µm. Die Dicke a kann dabei geringer sein als der Materialabtrag durch Verschleiß im Betrieb. Es hat sich gezeigt, dass die Verkürzung der Bremszeit auch dann noch gegeben ist, wenn der Verschleiß größer als die Dicke a Randschicht 21, in die Kohlenstoff und/oder Stickstoff eindiffundiert wurde, ist.

## Patentansprüche

1. Handgeführtes Arbeitsgerät mit einem Werkzeug und mit einer Bremseinrichtung (10) für das Werkzeug, wobei die Bremseinrichtung (10) ein Bremsband (13) umfasst, das eine Bremstrommel (12) umschlingt, wobei das Bremsband (13) und die Bremstrommel (12) Reibpartner bilden, die beim Bremsvorgang zusammenwirken, **wobei** ein erster Reibpartner ein austenitischer Stahl, ein Duplexstahl, Superduplexstahl, eine Nickelbasislegierung oder eine Kobaltbasislegierung ist,
**dadurch gekennzeichnet, dass** der erste Reibpartner einen Grundkörper (20) und eine Randschicht (21) besitzt, wobei die Härte der Randschicht (21) etwa 150% bis etwa 600% der Härte des Grundkörpers (20) beträgt und wobei der Carbidanteil in der Randschicht (21) weniger als etwa 0,5 Gew.-% beträgt.

2. Arbeitsgerät nach Anspruch 1,
**dadurch gekennzeichnet, dass** die Randschicht (21) eine Dicke von etwa 5 µm bis etwa 50 µm besitzt.

3. Arbeitsgerät nach Anspruch 1 oder 2,
**dadurch gekennzeichnet, dass** der Nitridanteil in der Randschicht (21) weniger als etwa 1 % beträgt.

4. Arbeitsgerät nach einem der Ansprüche 1 bis 3,
**dadurch gekennzeichnet, dass** der Kohlenstoffgehalt in der Randschicht (21) etwa 1 Gew.-% bis etwa 7 Gew.-% beträgt.

5. Arbeitsgerät nach einem der Ansprüche 1 bis 4,
**dadurch gekennzeichnet, dass** der Stickstoffanteil in der Randschicht (21) etwa 5 Gew.-% bis etwa 12 Gew.-% beträgt.

6. Arbeitsgerät nach einem der Ansprüche 1 bis 5,
**dadurch gekennzeichnet, dass** der erste Reibpartner das Bremsband (13) ist.

7. Arbeitsgerät nach einem der Ansprüche 1 bis 6,
**dadurch gekennzeichnet, dass** der erste Reibpartner die Bremstrommel (12) ist.

8. Arbeitsgerät nach einem der Ansprüche 1 bis 7,
**dadurch gekennzeichnet, dass** der erste Reibpartner ein rostfreier, austenitischer Stahl ist.

9. Arbeitsgerät nach einem der Ansprüche 1 bis 8,
**dadurch gekennzeichnet, dass** der zweite Reibpartner ein Stahl mit kubisch-raumzentrierter und/oder tetragonal verzerrter Gitterstruktur ist.

10. Verfahren zur Herstellung einer Bremseinrichtung eines handgeführten Arbeitsgeräts, wobei das Arbeitsgerät ein Werkzeug und eine Bremseinrichtung (10) für das Werkzeug besitzt, wobei die Bremseinrichtung (10) ein Bremsband (13) umfasst, das eine Bremstrommel (12) umschlingt, wobei das Bremsband (13) und die Bremstrommel (12) Reibpartner bilden, die beim Bremsvorgang zusammenwirken, **wobei** ein erster Reibpartner ein austenitischer Stahl, ein Duplexstahl, ein Superduplexstahl, eine Nickelbasislegierung oder eine Kobaltbasislegierung ist,
**dadurch gekennzeichnet, dass** in eine Randschicht (21) des ersten Reibpartners Kohlenstoff und/oder Stickstoff bei einer Temperatur von weniger als 500°C eindiffundiert wird.

11. Verfahren nach Anspruch 10,
**dadurch gekennzeichnet, dass** das Eindiffundieren über einen Zeitraum von mehr als 48 Stunden, insbesondere von mehr als 96 Stunden, erfolgt.

12. Verfahren nach Anspruch 10 oder 11,
**dadurch gekennzeichnet, dass** in die Randschicht nur Kohlenstoff eindiffundiert wird.

## Claims

1. Hand-held work device having a tool and a braking means (10) for the tool,
wherein the braking means (10) comprises a brake band (13), which wraps around a brake drum (12), wherein the brake band (13) and the brake drum (12) form friction partners, which interact during the braking process, wherein a first friction partner comprises an austenitic steel, a duplex steel, super-duplex steel, a nickel-base alloy or a cobalt-base alloy,
**characterised in that** the first friction partner has a base body (20) and an edge layer (21), wherein the hardness of the edge layer (21) is approximately 150% to approximately 600% of the hardness of the base body (20), and wherein the carbide proportion in the edge layer (21) is less than approximately 0.5 wt.%.

2. Work device according to claim 1,
**characterised in that** the edge layer (21) has a thickness of approximately 5 µm to approximately 50 µm.

3. Work device according to claim 1 or 2,
**characterised in that** the nitride proportion in the edge layer (21) is less than approximately 1%.

4. Work device according to one of claims 1 to 3,
**characterised in that** the carbon content in the edge layer (21) is approximately 1 wt.% to approximately 7 wt.%.

5. Work device according to one of claims 1 to 4,
**characterised in that** the nitrogen proportion in the edge layer (21) is approximately 5 wt.% to approximately 12 wt.%.

6. Work device according to one of claims 1 to 5,
**characterised in that** the first friction partner is the brake band (13).

7. Work device according to one of claims 1 to 6,
**characterised in that** the first friction partner is the brake drum (12).

8. Work device according to one of claims 1 to 7,
**characterised in that** the first friction partner is a rust-free, austenitic steel.

9. Work device according to one of claims 1 to 8,
**characterised in that** the second friction partner is a steel with body-centred cubic and/or tetragonally distorted lattice structure.

10. Method for producing a braking means of a hand-held work device, wherein the work device has a tool and a braking means (10) for the tool, wherein the braking means (10) comprises a brake band (13), which wraps around a brake drum (12), wherein the brake band (13) and the brake drum (12) form friction partners that interact during the braking process, wherein a first friction partner is an austenitic steel, a duplex steel, a super-duplex steel, a nickel-base alloy or a cobalt-base alloy,
**characterised in that** carbon and / or nitrogen is / are diffused at a temperature of less than 500°C into an edge layer (21) of the first friction partner.

11. Method according to claim 10,
**characterised in that** the diffusion takes place over a time period of more than 48 hours, in particular more than 96 hours.

12. Method according to claim 10 or 11,
**characterised in that** only carbon is diffused into the edge layer.

## Revendications

1. Appareil à main avec un outil et un dispositif de freinage (10) pour l'outil, le dispositif de freinage (10) comprenant une bande de frein (13) qui passe autour d'un tambour de frein (12), la bande de frein (13) et le tambour de frein (12) formant des partenaires de frottement qui coopèrent lors du freinage, un premier partenaire de frottement étant un acier austénitique, un acier duplex, un acier superduplex, un alliage à base de nickel ou un alliage à base de cobalt, **caractérisé en ce que** le premier partenaire de frottement comporte un corps de base (20) et une couche marginale (21), la dureté de la couche marginale (21) représentant environ 150% à environ 600% de la dureté du corps de base (20), et la proportion de carbure dans la couche marginale (21) étant inférieure à environ 0,5% en poids.

2. Appareil selon la revendication 1,
**caractérisé en ce que** la couche marginale (21) a une épaisseur d'environ 5 µm à environ 50 µm.

3. Appareil selon la revendication 1 ou 2,
**caractérisé en ce que** la proportion de nitrure dans la couche marginale (21) est inférieure à environ 1%.

4. Appareil selon l'une des revendications 1 à 3,
**caractérisé en ce que** la teneur en carbone dans la couche marginale (21) est d'environ 1% en poids à environ 7% en poids.

5. Appareil selon l'une des revendications 1 à 4,
**caractérisé en ce que** la proportion d'azote dans la couche marginale (21) est d'environ 5% en poids à environ 12% en poids.

6. Appareil selon l'une des revendications 1 à 5,
**caractérisé en ce que** le premier partenaire de frottement est la bande de frein (13).

7. Appareil selon l'une des revendications 1 à 6,
**caractérisé en ce que** le premier partenaire de frottement est le tambour de frein (12).

8. Appareil selon l'une des revendications 1 à 7,
**caractérisé en ce que** le premier partenaire de frein est un acier austénitique inoxydable.

9. Appareil selon l'une des revendications 1 à 8,
**caractérisé en ce que** le second partenaire de frottement est un acier avec une structure de réseau cubique centré et/ou tétragone.

10. Procédé pour fabriquer un dispositif de freinage d'un appareil à main, l'appareil comportant un outil et un dispositif de freinage (10) pour l'outil, le dispositif de freinage (10) comprenant une bande de frein (13) qui passe autour d'un tambour de frein (12), la bande de frein (13) et le tambour de frein (12) formant des partenaires de frottement qui coopèrent lors du freinage, un premier partenaire de frottement étant un acier austénitique, un acier duplex, un acier superduplex, un alliage à base de nickel ou un alliage à base de cobalt,
**caractérisé en ce que** dans une couche marginale (21) du premier partenaire de frottement, du carbone et/ou de l'azote sont diffusés à une température de moins de 500°C.

11. Procédé selon la revendication 10,
**caractérisé en ce que** la diffusion se fait sur une durée de plus de 48 heures, en particulier de plus de 96 heures.

12. Procédé selon la revendication 10 ou 11,
**caractérisé en ce que** seul du carbone est diffusé la couche marginale.
